(19) **Europäisches Patentamt**
**European Patent Office**
**Office européen des brevets**

(11) **EP 3 576 050 A1**

(12) # EUROPEAN PATENT APPLICATION

(43) Date of publication:
**04.12.2019  Bulletin 2019/49**

(51) Int Cl.:
***G06T 7/00*** *(2017.01)*

(21) Application number: **18174690.0**

(22) Date of filing: **29.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AE Eindhoven (NL)**

(72) Inventor: **Goshen, Liran**
**5656 AE Eindhoven (NL)**

(74) Representative: **de Haan, Poul Erik et al**
**Philips International B.V.**
**Philips Intellectual Property & Standards**
**High Tech Campus 5**
**5656 AE Eindhoven (NL)**

(54) **DEEP ANOMALY DETECTION**

(57)  A computer-implemented system for image processing. The system comprises one or more input interfaces (IN) for receiving i) an input image and ii) an imaging parameter that describe how the input image was obtained. A pre-trained-machine learning compo- nent (MLC) is configured to process the input image and the image parameters to obtain output data that facilitates classification or regression in respect of at least a part of the input image (IM).

Fig. 1

**Description**

FIELD OF THE INVENTION

The invention relates to systems for image processing, to systems for training machine learning components for image processing, to methods for image processing, to methods for training machine learning components for image processing, to a computer program element, and to a computer readable medium.

BACKGROUND OF THE INVENTION

The work of diagnostic radiology should ideally deliver low error rate detection of all anomalies based on an imaging examination and their accurate diagnosis.

However, the error rate among radiologic examinations has been found to be relatively high. Overall, approximately 30% of abnormal radiographic studies are missed, where approximately 4% of radiologic interpretations rendered by radiologists in daily practice contain errors. See for instance Antonio Pinto and Luca Brunese in "Spectrum of Diagnostic Errors in Radiology", published in World Journal of Radiology 2.10, pp 377-383, 2010. Nearly 75% of all medical malpractice claims against radiologists are related to diagnostic errors as reported by L. Berlin et al in "Malpractice and radiologists in Cook County, IL: trends in 20 years of litigation", published in AJR ("American Journal of Roentgenology"), vol. 165, pp. 781-788, 1995.

An increased workload, rising quality expectations, cognitive biases, and poor system factors all contribute to diagnostic errors in radiology and to the increased chance that a finding may be overlooked. As a result, there is an increased demand to improve the diagnostic reading environment and provide tools, preferably computer-based, to aid diagnostic work and to achieve low error rates.

The development of medical imaging systems in recent decades has brought many exciting advancements. For example, a multi detector-row CT (computed tomography) offers increased speed of acquisition, improved spatial resolution, and anatomic coverage. However, a challenge presented by these advantages is the substantial increase of the number of reconstructed cross-sections images that are rapidly created and in need of analysis. Moreover, since the introduction of CT in the 1970s, its use has increased rapidly. It is estimated that more than 80 million CT scans per year are currently obtained in the United States.

SUMMARY OF THE INVENTION

There may therefore be a need for alternative systems or methods to support image-based analysis.
The object of the present invention is solved by the subject matter of the independent claims where further embodiments are incorporated in the dependent claims. It should be noted that the following described aspect of the invention equally applies to the computer program element and to the computer readable medium.
According to a first aspect of the invention there is provided a (computer-implemented) system for image processing, comprising:

one or more input interfaces for receiving i) an input image and ii) an imaging parameter that describe how the input image was obtained;
a pre-trained-machine learning component ("MLC"), configured to process the input image and the image parameters to obtain output data that facilitates classification or regression in respect of at least a part of the input image; and
an output interface for outputting said output data.

According to one embodiment, the system comprises a conversion component (CC) that converts the output data into a classification or regression result.
Having the MLC process the imagery and its imaging parameter together helps decrease error rates and achieve robust image-based detection of anomalies for instance. In medical imaging it has been recognize that the image structures captured are the result of an interplay between the anatomy imaged and the way it has been imaged. The later factor captured in the imaging parameters. By learning the images along with its imaging parameters, the complex interplay can be better accounted for. For example, a certain region if looked at in isolation may as show a high probability of an anomaly, however the probability is actually lower because the appearance of an anomaly may also be due to an incorrect setting of an image parameter. And such incorrect settings may well happen in busy clinical environments.
According to one embodiment, the machine learning component is configured to include two processing strands, one for the input image and one for the imaging parameter, wherein the processing by the machine learning component includes merging a result from one of the strands with an input or a result of the other strand.
The merging of image-data with non-image data allows for robust detection and this can be achieved by having the two data types processed together, for instance by the same layer in a neural network ("NN") based MLC. The two data types may be presented as additional processing channel to layers in the NN. More particularly, in NNs of the convolutional type, some layers perform convolution operations. But convolution is a local operator. The merging enables the imaging parameters to be included in some or all of convolution operations. The merging may include reshaping of the data structure in which the imaging parameters are embedded.
According to one embodiment, the machine learning component is arranged as a neural network, in particular as a convolutional neural network.
According to one embodiment, the machine learning component is arranged as an autoencoder network.

In embodiments, it is proposed to use an output of a decoder stage of an autoencoder network to classify an image.

According to another aspect there is provided a (computer-implemented) system for training a machine learning component, comprising:

> an input interface for receiving i) at least one training image obtained from a corpus of images and ii) an imaging parameter that describes how the at least one training image was obtained;
> a training component configured to train a machine learning component based on the at least one training image and the imaging parameter as input for the machine learning component.

Adding the image parameters as input to the learning of the NN helps to identify hidden relations image structures and image parameter settings.

According to one embodiment, the training component configured to adjust a configuration of the machine learning component so as to decrease a difference between a target and a second image that is output by the machine learning component.

In case of an autoencoder, no explicitly labelled training data is required and the target is set equal the input image at the input layer of the autoencoder. The autoencoder is then trained so that the (second) image at the output layer is a good approximation of the input image. The goodness may be measured by a similarity measure. In this manner the configuration of the autoencoder may be considered as a model of features of the class of the input images. By using training images from a single class (eg, normal imagery for a given anatomy or region of interest), the model improves and learns what "normal" anatomy means.

A "configuration" as used herein comprises all variable (weights, filter coefficients) that are adjustable during training. A given set of such variable defines the way an MLC acts, thus forms a configuration of the MLC.

According to one embodiment, the training component includes a sparsity constrainer to regularize the training of the machine learning component by the training component.

In other words, the sparsity constrainer is configured to make the training component favor, from two candidate configurations, the one with a lower sparsity. Using sparsity constraints allows reducing the risk for overfitting.

Sparsity as used herein is a measure for the number/proportion of responses in a neural network type architecture that are passed on to a next layer. Sparsity enforcement may be used as a regularization when training the MLC.

According to one embodiment, the target is set equal to the input image. According to another aspect there is provided a (computer-implemented) system for training a machine learning component, comprising:

> an input interface for receiving training images obtained from a corpus of images;
> a combiner configured to combine a first training image with one or more of the other training images to obtain at least one combo-input image;
> a training component configured to train a machine learning component based on providing to the machine learning component the at least one combo-input image as input and the first image as a target.

Preparing the comb-input image is this manner allows achieving sparsity, without necessary using explicit constraint, such as dedicated functional components, to enforce sparsity.

According to one embodiment, the training component configured to adjust a configuration of the machine learning component so as decrease a difference between the target and a second image that is output by the machine learning component.

According to one embodiment, the training component includes a sparsity constrainer for regularization as explained above.

According to one embodiment, the training images are of the same category. In embodiments, for instance where the MLC is an autoencoder, using training imagery from a single category allows simple and quick training, without supervision. In medical context the classes or category of interest include in embodiments, the category of normal images that represent normal anatomies or the category of anomalous images that represent anomalous anatomies. The category of normal images are preferred herein.

According to another aspect there is provided a system of image processing, comprising:

> an input interfaces for receiving an input image;
> a pre-trained machine learning component, configured to process the input image to obtain a first representation of the input image and configured to attempt recovering from said first representation the said input image to obtain a second image as output; and
> a comparator configured to compute a similarity measure that quantifies at least a local difference between the input image and the second image.

According to one embodiment, the system comprises a conversion component configured to compute a classification or a regression in respect of at least a part of the input image, based on said similarity measure.

According to one embodiment, the system comprises a visualizer configured to render on a display device a visualization of the classification or regression.

According to one embodiment, the visualization includes a map superimposable on the input image, the map configured to provide the visualization of the classification or regression per image location of said input image.

According to one embodiment, the computing by the comparator of the similarity measure includes computing any one or a combination of i) at least one statistical or probabilistic quantity, ii) at least one information-theoretic quantity, iii) at least one difference image value.

According to one embodiment, the machine learning component is configured to process the input image together with an imaging parameter that describes how the image was obtained.

According to another aspect there is provided a (computer-implemented) method of image processing, comprising:

receiving i) an input image and ii) an imaging parameter that describe how the input image was obtained;
processing, by a pre-trained-machine learning component, the input image and the image parameters to obtain output data that facilitates classification or regression in respect of at least a part of the input image; and
outputting said output data.

According to another aspect there is provided a (computer-implemented) method of training a machine learning component for image processing, comprising:

receiving i) at least one training image obtained from a corpus of images and ii) an imaging parameter that describes how the at least one training image was obtained;
training a machine learning component based on the at least one training image and the imaging parameter as input for the machine learning component.

According to another aspect there is provided a (computer-implemented) method of training a machine learning component for image processing, comprising:

receiving training images obtained from a corpus of images;
combining a first training image with one or more of the other training images to obtain at least one combo-input image;
training a machine learning component based on providing to the machine learning component the at least one combo-input image as input and the first image as a target.

According to another aspect there is provided a (computer-implemented) method of image processing, comprising:

receiving an input image;
processing, by a pre-trained machine learning component, the input image to obtain a first representation of the input image and configured to attempt recovering from said first representation the said input image to obtain a second image as output; and comparing at least a local difference between the input image and the second image based on a similarity measure that quantifies said difference.

In embodiments, the input image or training image is medical.

In embodiments, the categories of the classification include at least one of normalcy and anomaly for a given anatomy.

According to another aspect there is provided at least one computer program element, which, when being executed by at least one processing unit, is adapted to cause the processing unit to perform a method as per any one of the above described aspects.

In embodiments, the processing unit is configured for parallel computing, such a microprocessor having a multicore design.

According to another aspect there is provided at least one computer readable medium having stored thereon the program element.

In general, the "machine learning component" is a computerized arrangement that implements a machine learning ("ML") algorithm that is configured to perform a task. In an ML algorithm, task performance improves measurably after having provided the arrangement with more training data TI. The task's performance may be measured by objective tests when feeding the system with test data. The task's performance may be defined as requiring a certain error rate to be achieved for the given test data. The task of main interest herein is the automatic detection of images of a certain predefined category or class. See T. M. Mitchell, "Machine Learning", page 2, section 1.1, McGraw-Hill, 1997.

"Autoencoder (AE)" is a neural network (NN) architecture, in particular a convolutional NN (CNN), where a size (measured in nodes for example) of its initial output layer equals the spatial dimensions of it final output layer.

A machine learning component, in particular constructed according to the "mapping/remapping principle", may include at least two hidden layers. One layer is configured to map the initial input image down to a representation of a lower dimension than the initial input image and the at least one other layer is configured to remap the representation to a second image having the same dimension as the input image. The representation may be referred to herein as the central representation because it emerges as an intermediate output between the said at least two hidden layers. Some autoencoders are exemplary embodiments of the mapping/remapping principle.

In embodiment, the proposed method and systems are based on a new deep sparse autoencoder approach. This model utilizes the paradigm of sparse and, optionally, over-complete representation, which have been found yield good results in various applications. The training of the model is based on the autoencoder approach, which may be called an unsupervised learning approach.

The main application of this innovation is an automatic detection of anomalies, i.e., providing an anomalies map. The proposed method could provide clinicians a more effective reading tool that could reduce the overall reading time, effort and could reduce the chance that an anomaly may be overlooked.

The proposed approach is an efficient approach, in which the developer does not have to provide a training set with annotations. A1 that is required is to provide a corpus of training imagery of single category or class, preferably images of normal anatomies, that is anatomies without anomalies. Usually, gathering of such normal category imagery is a much simpler and much less costly task than explicit labelling.

BRIEF DESCRIPTION OF THE DRAWINGS

Exemplary embodiments of the invention will now be described with reference to the following drawings which are not to scale, wherein:

> Fig. 1 shows a schematic block diagram of an image processing arrangement;
> Fig. 2 shows an image processing system according to one embodiment;
> Fig. 3 shows a schematic block diagram of a machine learning component;
> Fig. 4 shows an image processing system according to a second embodiment;
> Fig. 5 shows am flow chart of an image processing method according to one embodiment; and
> Fig. 6 shows a flow chart of an image processing method according to a second embodiment.

DETAILED DESCRIPTION OF EMBODIMENTS

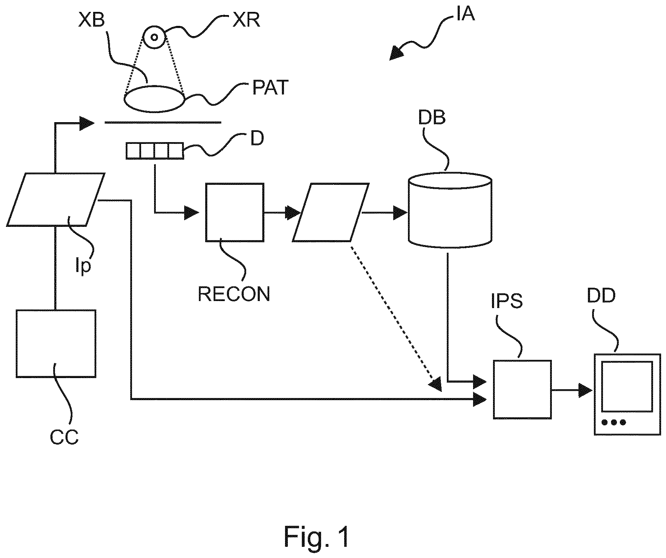

With reference to Fig 1 there is shown a schematic block diagram of an image processing arrangement.

The arrangement may include an imaging apparatus IA and an image processing system IPS. The imaging apparatus is configured to acquire one or more images of an object PAT. The image processing system is configured to analyze the one or more images IM acquired by the imaging apparatus IA.

Turning first to the imaging apparatus, this in general includes a component capable of generating an interrogating signal and a sensor component to detect the interrogating signal after interaction of this interrogating signal with the object of interest OB.

Examples for the imaging apparatus envisaged herein include x-ray imaging apparatuses. An x-ray apparatus is configured to acquire an x-ray image of the object OB. In the case of x-ray imaging the interrogating signal is x-ray radiation and the above-mentioned component is the x-ray source XR. Correspondingly in x-ray imaging the sensor is an x-ray detector D. Embodiments of x-ray imaging apparatuses envisaged herein include a C-arm imaging apparatus, a CBCT (Cone Beam CT) scanner, a CT scanner, a spectral CT scanner, a mammography apparatus or a radiography apparatus, or other, each configured to acquire an X-ray image of an object PAT.

In more detail, the X-ray imaging apparatus IA includes an X-ray source XS and an X-ray sensitive detector XD. In use, the object OB is positioned along axis z in an examination region within the X-ray source XS and the X-ray detector XD. The X-ray source XS is energized to produce an X-ray beam XB which emanates from a focal spot FS and traverses the examination region and hence at least a region of interest of the object OB.

The X-radiation interacts with matter (e.g. tissue, bones, etc.) of the object OB. After interaction, the X-radiation emerges at the far side of the object OB to then impinge on the X-ray detector XD. The impinging X-radiation is detected by the detector XD and converted into electrical signals. The electrical signals are converted by suitable conversion circuitry (not shown) into a collection of image values which form an image, in this case an X-ray image. The X-ray images are capable of showing details of the internals of the imaged object OB. This can help in diagnosis and therapy or other examination of the imaged object OB. The images may include projection imagery.

Although main applications for the imaging apparatus IA envisaged herein are in the medical field, nonmedical contexts such as non-destructive material testing or baggage screening, etc. are not excluded herein. Accordingly, the term "object PAT" is used herein in the general sense to include animate "objects" such as a human or animal patient, or anatomic parts thereof but also includes inanimate objects. However, proposed system will be discussed herein with main reference to the medical field, so we will be referring to the object PAT as "the patient" or as a ROI, being a particular anatomy or group of anatomies of the patient PAT.

The present disclosure is not confined to X-ray imagery however, as other technologies or modalities in transmission or emission are equally envisaged herein. Embodiments include SPECT/PET, US, phase contrast imaging, dark-field imaging, microscopy, histology, MRI, etc. As mentioned, application domains other than medical are also envisaged herein, and these may include for example, hydrological images in the geographic field or seismographic imagery in geological prospecting, or infrared, sonar or other images.

The imagery supplied by the imager IA may be further processed into other imagery by a processor RECON that implements a processing algorithm such as a reconstruction algorithm in CT. In CT, a reconstruction algorithm converts projection imagery from 2D in the detector domain into slice imagery of a 3D volume in an image domain situated in the examination region. The projection data is collected in a rotation by the X-ray source XR around the ROI. Thus, the CT 3D volume includes a collection of such 2D slice images, one for each z position on the imaging axis z.

In other envisaged imaging modalities (MRI, SPECR, PET, US), other reconstruction algorithms may be used that convert signals from the detector domain into the respective image domain (that is, a part of space where the object to be imaged is situated).

The image values in the images as supplied by the imaging apparatus may be organized in a suitable data structure, such as one or more $n$-dimensional matrices, or "tensors" (n>3). Suitable values for $n$ are 1, 2, 3, 4 or n>4. The image may be greyscale or color. Color imagery may be encoded in an RGB scheme or another suitable encoding scheme.

For instance, the image values may be represented in rows and columns $i,j$ to represent spatially two dimensional structures. Spatially three dimensional image values may be represented as rows and columns $i,j$ and a depth component $k$.

In embodiments the image may be represented in a 2D structure with rows and columns $i,j$ but the image in fact forms a section or sub-space of a three dimensional volume such as the slice imagers of a CT 3D volume. Similarly, MRI volumes may also include 2D slice images which are sections in 3D. 2D or 3D imagery acquired through time may be represented as a 3D or 4D image data, respectively, with the third or fourth component representing acquisition time.

Even though the imagery represents 2D structures, at times a higher dimensional representation may still be used such as in color images encoded in RGB. An RGB image may be represented as a three dimensional structure with the two spatial dimensions $i,j$ corresponding whilst another component represents the red, green and blue image values respectively for any given image location $i,j$. In other words, 2D color image maybe represented as a 3D volume formed by the super position of three distinct 2D images each representing respectively the red, green and blue image values for a given image location.

Accordingly, spatially 3D color imagery acquired through time may thus be represented as a seven-dimensional tensor: three spatial dimensions, three dimensions for the color values, and one dimension for time. A grey value image may be represented without an additional depth component.

When obtaining the imagery using the imaging apparatus IA, one or more acquisition parameters AP may need to be adjusted. This adjustment may occur automatically through a suitable imaging protocol that forwards suitable setting commands through a communication network to the imaging apparatus. Alternatively, the acquisition parameters AP maybe set by a user through an operation console CC. For instance, in x-ray imaging, acquisition parameters may include any one or more of the following: scan type, body part, XR source (tube) XR settings such as mA, mAs, kVp, rotation time, collimation setting, pitch, etc. "Scan type" can be helical or axial and/or may specify the region of interest (ROI) to be imaged, such as chest, lung, pulmonary embolism, cardiac, etc. "Pitch" is a parameter in multi-slice spiral CT and is defined as the ratio of table increment over detector collimation.

If a reconstruction operation by a reconstruction module RECON is required, such as in CT or MR or in emission imaging (PET/SPECT) this may require the specification of reconstruction parameters to accordingly adjust the reconstruction algorithm. Suitable acquisition parameters envisaged in CT reconstruction may include any one or more of the following: reconstruction filter, reconstruction algorithm (e.g., FBP, iDose or IMR), slice thickness, slice increment, image size (in pixels or voxels, $m \times n$) and field of view, etc.

The acquisition parameters specify how the imaging apparatus is to operate to acquire image signals which are then converted into image values. The acquisition values describe how the image values are converted into other image values. Both parameters, the acquisition parameters and/or the reconstruction parameters, are thus influencing the image values or distribution thereof in the initial input imagery. The acquisition parameters AP and/or, if applicable, the reconstruction parameters RP maybe referred collectively as the "imaging parameters IP". In short, the imaging parameters IP describe how the initial input imagery were obtained.

Suitable graphical processing may be used to effect display of the imagery on one or more display devices DD. The images may also be stored in data storage DD, such as a database DD or may be otherwise further processed. The images may be transferred from the imaging apparatus to storage DD through a wireless or wired commutation network. The obtained images (with or without reconstruction), as supplied by (one or more) imaging apparatus IA and/or as retrievable from storage DD, will be referred to herein as the "initial input image(s)" or "initial input imagery" as these are envisaged for input to the image processing system IPS.

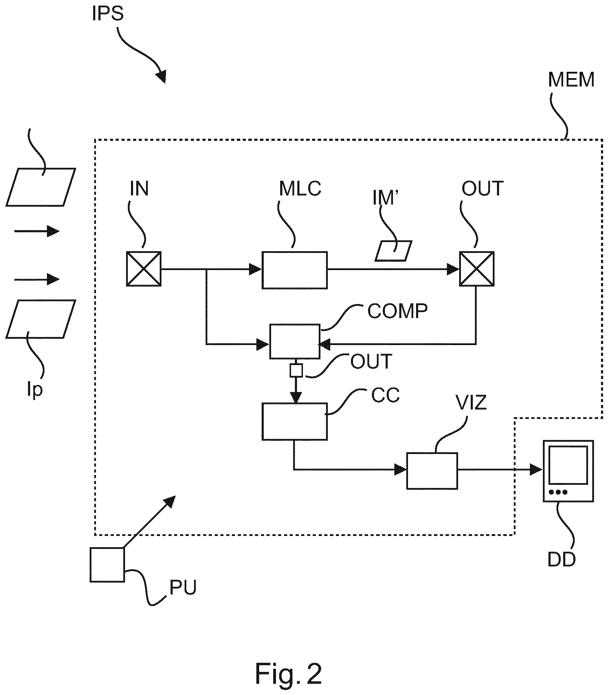

Operation of the proposed image processing system IPS will now be explained in more detail with reference to the schematic block diagram of Fig. 2.

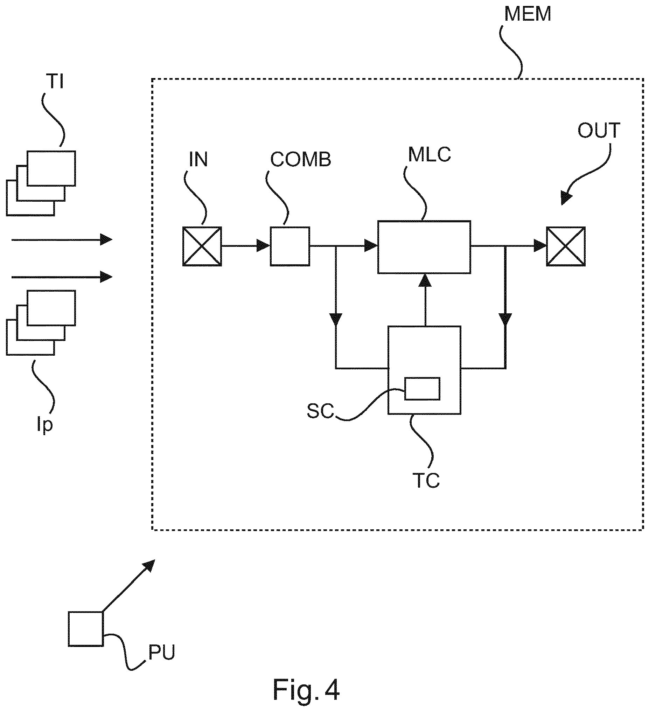

The image processing system IPS as configured herein is a computerized system configured to provide a regression or classification result in respect of an image IM of the patient or of a region of interest of the patient. The system IPS may be described in terms of two operational modes, deployment mode and training mode. Broadly, in deployment mode, the system IPS operates on new imagery IM to perform the classification or regression task. In training mode, the system is trained or adjusted so that it can perform the task with the desired success rate. In the following, when discussing the system IPS, we will be focusing first on the deployment phase and will discuss the training mode further below at Fig 4.

As the present disclosure is mostly concerned with medical imagery, the explanation will focus on classification of the initial image IM into one of two classes called herein normal or anomalous, respectively. More particularly, in one embodiment the system is configured to provide an automatic detection or recognition task of whether the (initial) medical image IM is normal or anomalous. If the initial image IM is found anomalous it is assumed that the patient PAT, from which the image has been taken, presents with a medical anomaly. Otherwise the medical image IM is considered normal, and the patient is thought not to present with a medical condition or anomaly. Again, the two classes, anomalous and normal, as used herein are according to exemplary embodiments only and do not limit what is described herein. More than two classes may be analyzed for in other embodiments.

More specifically, there may be more than two classes considered so the classes may not necessarily be complimentary, as is the case for the anomalous and normal class. Also, and as mentioned above, the present disclosure is not confined to the medical field so other classes may be used instead, for instance when analyzing geological or hydrological imagery or satellite imagery or other. The initial image is either directly supplied from an imaging apparatus IA or is retrieved from a data base DB such as a hospital information system HIS or other repository.

The classification into the two or more classes may be configured as a hard classification, (as binary into "yes" or "no") or a soft one in terms of probability map.

The image to be analyzed IM is received at input port IN of the image processing system IPS. The proposed image processing system IPS as configured herein processes not only the initial image IM but also its imaging parameters IP. Both the imagery IM and its associated imaging parameters IP are both together processed in the proposed image processing system IPS. More particularly, the imagery IM and its imaging parameters IP are received at input port IN. The imagery IM and its parameters IP are then processed by pre-trained machine learning component MLC.

The training procedure of the proposed image processing system, in particular the machine learning component MLC, will be described later in more detail at Fig. 4.

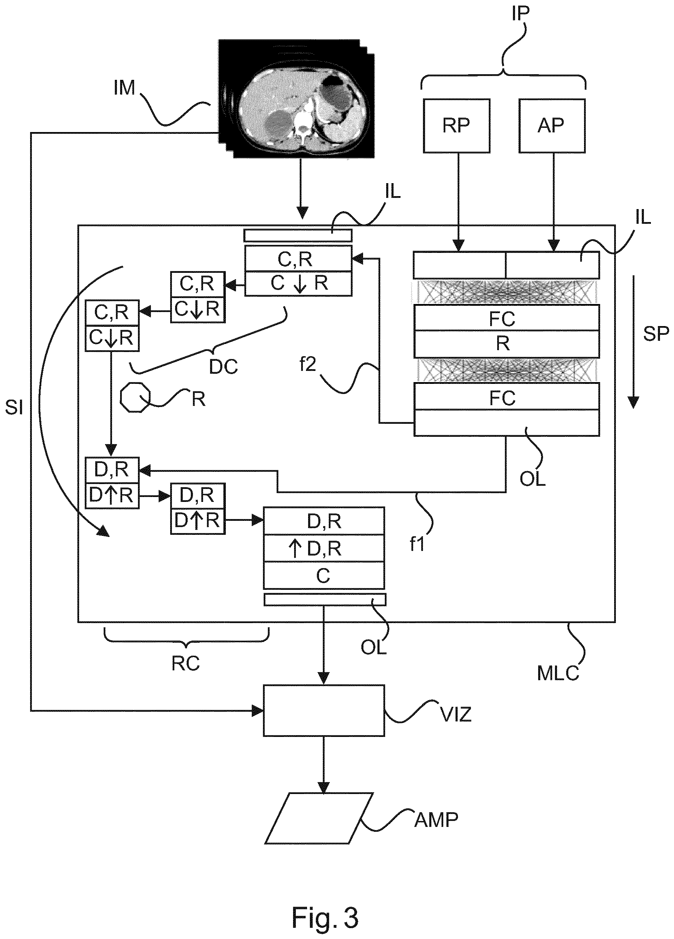

The machine learning component may be configured in any of the following ML technologies such as support vector machines, decision trees, etc., or any combinations thereof. In particular, a neural-network ("NN") structure (such as convolutional NNs or others) is envisaged herein for the machine learning component MLC. In one embodiment, as it will be described in more detail in Fig. 3, the machine learning component MLC includes a special type of convolutional NN ("CNN"), an autoencoder ("AE") network.

The processing of the machine learning component provides at output OUT a result which may be processed by a conversion component CC into the indication for a regression or classification result. In one embodiment this indication result may be visualized by a visualizer VIZ on a display device DD. This provides the user with a visual indication on whether the image is deemed normal or anomalous. In addition to or instead of providing a graphical indication, a textual, audio or other form of indication is also envisaged in embodiments.

In one particular embodiment the machine learning component has a feedback structure where the result, as output at output port OUT, is an attempted recovery IM' of the initial input image IM, and this is compared by a comparator COMP with the initial imager IM. More particularly, the machine learning component may be based on a dimension reducing algorithm. In this embodiment, the machine learning component MLC is configured to find a low dimensional representation R of the combined input formed by the imagery IM and its imaging parameters Ip. More specifically, the machine learning component processes the imagery and its imaging parameters to map same into a low dimensional representation M and to then remap the representation in an attempt to recover the initial imagery IM from the model M. The remapping thus results in a second image IM' that is output at output port OUT. When the MLC is an autoencoder, the mapping operation is the encoding operation and the remapping step is the decoding operation.

The comparator COMP uses a suitable similarity measure to quantify a difference between the initial imagery IM and the attempted imagery IM'. The imaging parameter IP may also be accounted for in this comparison. A possible deviation or difference between the imagery IM and IM prime is then converted by the conversion component CC into the mentioned classification or regression result.

In particular, the conversion component CC converts the quantified difference into the sorter after regression or classification result. The classification or regression result converted from the similarity measure may then be forwarded to the visualizer VIS which is configured to produce on the display device DD, a preferably, graphical indication for the regression or classification result. More particularly, as mentioned above, an indication may be provided in this manner whether the image IM is anomalous or normal.

Although the classification component CC is shown as separate from the machine learning component, this may not necessarily be so in all embodiments where the CC component is fully integrated into the machine learning component itself.

In embodiments, the classification into the two or more classes is a hard one. In other words, a binary decision is made whether the image is in a class or not. VERY CLEAR) For instance, a decision is made whether the image as a whole is anomalous or normal. Instead, a more refined, locally resolve, classification result may be provided per image element, for instance per pixel or voxel or groups thereof. For instance, a voxel or pixel or group thereof may be classified to relate to a normal or anomalous structure.

In yet another embodiment no hard decision is taken but a soft classification is produced in terms of a probabilistic indication, that is a number between 0 and 1. As before, for the hard classification, the probabilistic indication may be global for the whole image IM or may be locally resolved. For instance, a number $0 \leq p \leq 1$ may be provided that indicates the probability whether there is an anomaly in the imagery IM. That is, the probabilistic scheme may be resolved spatially to provide for each voxel or pixel or group thereof a respective probability result. The localized probability results indicate whether at the respective image location an anomaly is present. The collection of all spatially resolved probabilities together form a probability map. This map may be referred to in embodiment as an anomaly map AMP. Thus, in embodiments, the conversion component together with the machine learning component acts as an anomaly map generator to aid the user in diagnostic tasks. Conversely, the system may be configured to provide a "normalcy map" where image locations are flagged up that are classed as normal. The machine learning component is held in one or more memories MEM of one or more local or remoted computing devices PU.

If the MLC has been trained with normal imagery, the proposition is that anomalies will not be accurately modelled when applying an anomalous image IM to the MLC during deployment. Therefore, in anomaly regions, we should expect to have larger differences between the input image IM and the remapped output image IM'. The comparison by the comparator COMP may be based on a range of similarity measures, such as any one (or a combination) of the following operators:

- Local cross correlation
- Local normalized cross correlation
- Local mutual information
- Local root mean squared of image differences
- Local mean absolute value of image differences

In the above exemplary embodiments, the term "local" implies that the respective operator is applied on patches or neighborhood of voxels around voxels. One patch is taken from the input image IM and another patch is a spatially corresponding patch taken from the remapped output image IM'. In the alternative, the operators may be applied globally to obtain a measure for the image as a whole as mentioned above. By applying the above operators locally, a similarity map is generated which may be visualized by the visualizer VIZ.

The abovementioned probability map may be obtained by applying a logistic function. In one embodiment the following logistic function *f* is used for each voxel of the abovementioned similarity maps (i.e., local cross correlation, local normalized cross correlation, etc):

$$f(x) = \frac{1}{1+e^{-k(x-x_0)}}$$

where $x$ is the value of a voxel, $k$ is a control parameter that controls the steepness of the curve and $x_0$ is a sigmoid's midpoint, which could be set for example at the $x$'s $P$-th percentile of the corpus of training images TI that was used to train the MLC. "$P$" can be any suitable value between 1 and 100, such as 5, 10, 25, 50, 75 or 99 or any other value. The logistic function f is but one example for probability conversion and other approaches are also envisaged herein.

The probability values may be color-coded and displayed superimpose on the input image. A threshold $p_0$ may be used and only probability values that exceed the threshold or are below the threshold are visually indicated by color, hue or otherwise. For instance, if the MLC has been pre-trained with normal imagery, only probability values are visually flagged up that indicate anomaly.

In a hard classification, no probability conversion is envisaged. In this case, the similarity measure itself may be compared by the conversion component CC against a predefined threshold to decide whether the image as a whole or an image element or group thereof is indicative of normalcy or anomaly.

In one embodiment the imaging parameters that are processed by the machine learning component together with its associated imagery may be derived directly from the imagery itself. For instance, in embodiments the imagery IM is of the DICOM format where some or all of the imaging parameters are included in header files of the image IM file.

In other embodiments however, the imaging parameters associated with the initial input image IM is obtained otherwise, for instance it has been supplied by the user through manual input or is retrieved by data base query in a hospital information system or other data base system.

The imagery IM and its imaging parameters may not necessarily be received simultaneously at the input port IN. For instance, the image data IM is received first, whilst the database query to retrieve the imaging processing parameters is still ongoing. In the alternative, the imaging parameters are received first, whilst the image IM is received later.

The imaging parameters IP and the imagery IM may not necessarily be received by single input interface IN, but each may be received in separate respective input interfaces (not shown).

Reference is now made to Fig. 3 which shows a schematic block diagram of a machine learning component MLC (referred to herein as "MLC") as envisaged herein in one embodiment. Before explaining the MLC in more detail, some preliminary remarks may be on order.

Initially, the machine learning component is for now assumed to have been pre-trained. Specifically, it has been trained with imagery TI from a single class, for instance anomalous or normal imagery assuming. For the case of discussion, we are assuming the machine learning component has been pre-trained by imagery that has been classed as normal. Also, we are assuming for now that the MLC has not seen the initial image IM before, in other words, the initial input image IM is a new image that was not in the set (or corpus) of previously used training images TI from which the MLC has been trained. In the training, the machine learning component has been populated with a set of parameters, including "weights" as these are known for NNs. Given an architecture (of which more further below), these MLC parameters determine the MLC. The collection of all parameters will be referred to herein as the configuration of the MLC. The MLC parameters once adjusted in the learning procedure, define the configuration of the machine learning component.

Broadly, and referring now in more detail to its operation, the MLC is configured to perform a down-mapping-remapping operation. Specifically, the MLC maps the initial input image IM together with its imaging parameters Ip into a, preferably, lower dimensional "central" representation R. The MLC then operates to attempt recovering the initial input image IM from said lower dimensional representation R by remapping into a second image, in an attempt to meet the initial image. The proposition is that by mapping down into a lower dimensional representation R, more general, more fundamental properties and patterns can be captured. This "central" representation R may be understood as an aspect of a model of the category/class of interest, for instance of the "normal" category or "anomalous" category. In terms of structure, the representation R may be a matrix or tensor. A dimension of this representation R may be lower than that of the initial image. In other embodiments, the dimension may not necessarily be lower spatially, but simpler, such as sparser than the initial image IM, with fewer non-zero entries for example. If the MLC has been well configured in the training mode (of which more further below at Fig 4), one may expect the second image obtained in the remapping to be similar to the original initial image. The comparator COMP as discussed above in Fig. 2 can then be used to quantify the similarity. The quantified similarity can then be converted into a suitable indication as to whether the input image IM is of the class/category or interest or not.

When mapping back the imagery IM, in embodiments, it is also the imaging parameters that are so mapped back along with the image data. However, after the mapping-back, the imaging parameters may be disregarded and it is only the mapped-back image, the said second image, that will be further processed. In other words, the imaging parameters IPS are merely used to map and remap the imagery, or, in the autoencoder setup, to encode and decode. The imaging parameters themselves are not envisaged as final outputs in the proposed MLC although this may still be done in alternative embodiments.

In some embodiments, but not necessarily all embodiments, the MLC is arranged in a neural-network ("NN") architecture. More specifically, in embodiments the MLC is configured as a convolutional neural network ("CNN"). In a preferred embodiment, the MLC includes an autoencoder ("AE"). We will first explain the above described mapping/remapping principle based on a novel CNN network architecture, with the understanding that the principle is of broader application and may be harnessed by other ML technologies as well, all envisaged herein. For example, the above described mapping/remapping principle can be realized with other ML techniques than NN, such as SVM, response surfaces, iterative principal component analysis, etc.

Broadly, the NN structure of the machine learning component includes a plurality of nodes, at least partly inter-connected and arranged in different layers. The layers are arranged in one or more sequences. Each node is an entry capable of assuming a value and/or can produce an output based on input it receives from one or more nodes of an earlier layer.

Each node is associated with a certain function which can be a simple scalar value (node weight) but can also be with more complex linear or non-linear functions. A "connection" between nodes in two different layers means that the node in the later layer can receive an input from the node in the earlier layer. If there is no connection defined between two nodes, no output of one of the two nodes can be received by the other node as input. The node produces its output by applying its function to the input. This can be implemented as a multiplication of the received input by the scalar value (of weight) of the node. More than one input from different nodes may be received by a node in a later layer. The different inputs may be consolidated by a consolidating function g to produce a consolidated value and it is this consolidated value to which the receiving node applies its own function $f$ to produce the output for the node. For instance, g may map the received inputs from earlier nodes into a sum of products (eg, dot product) and the node's function f may then be applied to said sum of products.

A connection may have its own weight ("connection weight"). The weight is used to weigh output that travels along that connection. The consolidated function may combine all the received input for a given node using the connection weights to produce the consolidated dot product output. The connections between layers may be fixed or may vary during processing. Some layers may be fully connected whilst others may not be. Two layers are fully connected if each node in the later layer is connected with all nodes of the previous layer. In partially connected layers, not all nodes in the later layer are connected to all nodes in the earlier layer.

The outputs of all nodes of a given layer may be referred to herein as the "output of the layer" and the inputs received from an earlier layer may referred to herein as "the input of the layer".

Each layer may be represented as a matrix of two, three or higher dimensions. If the dimension is three or higher, the matrices are commonly referred to as a tensor. The nodes implemented as entries in those matrices or tensors. Each layer has a size (rows $i$ and columns $j$), a depth $k$ (which may be larger than 1) and possibly further dimensions. Alternatively, the size, depth and the one or more further dimensions may be realized by other data structures than matrices or tensors.

The MLC component in a neuro-network structure includes one or more initial input layers IL and one or more final output layers OL. The initial input layers IL are where the initial image IM and the imaging parameters $Ip$ are received, by populating the nodes or by presenting the final result for further proceeding by the conversion circuity CC or other, respectively.

The layers, as shown in Fig. 3, are arranged in a deep architecture. The architecture includes one or more hidden layers between the output layer(s) and the input layer(s). The number of hidden layers defines the depth of the network MLC. For instance, a single hidden layer envisaged in some embodiments amounts to a depth of "one". Preferably, however, there are at least two hidden layers used. Preferably, there is an even number of hidden layers, such as 4, 6, or more. The input received from an earlier layer at a hidden layer will be referred to as an intermediate input, whereas the output produced by the hidden layer passed on to a subsequent hidden layer will be referred to as an intermediate output.

In general, in the NN architecture of MLC, the input data IM, Ip is applied as initial input at the one or more input layer(s) IL. The data is then sequentially transformed as the data (image IM and parameter $Ip$) passes through the layers in sequence. At each layer an intermediate output is produced which then serves as intermediate input for the next layer etc., at each instant the respective layer acting of the received intermediate input by applying thereto an operation until a final result emerges at the one or more output layer(s) OL. The NN architecture, envisaged herein is preferably of the feed-forward type where, as described above, the data propagates forward from layer to layer. Alternatively, recurrent architectures may also be envisaged herein, where one or more layers are revisited during processing.

Because different types of data (input image IM and imaging parameters Ip) are processed together the proposed NN architecture of the MLC may include multiple strands or processing paths, one or more for the input image IM and one or more for the imaging parameters $Ip$. In embodiments, the image SI includes a mapper section DC, where the mapping is performed, and a remapper section RC where the remapping operation is performed. In embodiments, the NN is an autoencoder ("AE"), in which the mapper section DC is the encoder part and the remapper section RC is the decoder part.

The strand SP for processing the imaging parameter $Ip$ is configured to reshape the imaging parameters $Ip$ into a "pseudoimage" for more efficient processing with the image data IM and to achieve better recognition performance. The pseudo-image is output as a result at the conclusion of processing in strand SP and may then be fed into the image strand SI, as indicted by arrows ("feedlines") f1 and f2 in Fig 3. There may be a single or more than two such feedlines. In embodiments, the reshaped pseudo-image is merged at feedlines f1,f2 with the image data IM as processed in SI to produce at its final output OL a compounded image. The compounded image combines (processed) image data IM from the initial input image IM and the imaging parameters. The operation of the re-shaper strand SP may also be understood as a reformatting of the imaging parameters Ip so they can be processed together with the "true" image data IM.

Different types of layers may have different functions and hence apply different operations. Before explaining operation of MLC in yet more detail, we now turn first to discuss the different types of layers, some or all envisaged herein in different combinations and subcombinations before.

NN layer types envisaged herein include any one or more, or all of the following in combinations: fully connected layers FC, convolution layers C, deconvolution layers D, up-sampling layers ("t"), down-sampling layers ("↓"), activation layers R as shown in Fig. 3. The layer types are grouped into units to form various operational units, for each scale level s. For example, deconvolution or convolutional layers may be combined with an up-sampling or down sampling layer and an activation layer. For instance, the expression "C, ↓, R" in Fig. 3 indicates a group of layers, arranged in sequence as a convolutional layer C followed by a down-sampling layer ↓, and then by an activation layer R a rectifier unit R. Although grouping layers into such units of 2, 3 or more layers can have implementational advantages when expressed as matrices/tensors and matrix/tensor multiplications, the grouping is not necessarily envisaged in all embodiments.

Turning now in more detail to the activation layer R, this may be implemented using any non-linear function, including logistic-based sigmoid functions, *arctan, softmax,* rectifier function $(x^+=max(x,0))$, or others. A layer that implements the rectifier function may be called a rectified linear unit (ReLU). The activation layer R implements a nonlinear function that is applied to the values in each node to introduce a non-linearity to enable the MLC to capture nonlinear pattern. The size of the (intermediate) input layer is preserved by the rectifying layer R. Layer R also serves as an "importance filter" to remove or mitigate an input if this is below a threshold. An input from a node may be completely annulled and hence not forwarded at all to the next layer despite there being a connection. The node is then said not to "fire" and this event is then recorded by forwarding "zero" to the next layer. The proportion of not firing nodes in a given configuration may be expressed as the sparsity of the MLC.

Turning next to fully connected layers FC, the layers envisaged herein in MLC are not necessarily fully connected although in embodiments the network MLC does include two or more fully connected layers. Fully connected layers are shown as FC in Fig. 3 above. The fully connected layers FC represent more traditional, non-convolution NN components where each node is associated with its activation function and a weight. Each node in one layer of the FC receives an input from all nodes in the previous layer each weighted according to the respective weight for the connection, as explained above in the general introduction. This total input is then summed and evaluated by an activation function layer R. The activation function layer is applied to the weight of the respective node to produce a node output which is passed onto nodes in the subsequent layer. The advantage of using FCs are to model more complex, non-linear patterns.

The convolutional layer C and de-convolutional layers D (and/or the up sampling or down sampling layers) are examples of non-fully connected layers. More particularly, these layers are not fully connected to all nodes of the earlier layer. In addition, the connections vary when processing the (intermediate) input from the earlier layer.

In convolution layer C, each node of the intermediate output is obtained by convolving the convolution layer with a sub-group of nodes of the earlier layer, thus involving only a sub-set of all possible connections. The connections are then redefined to single out a new group of nodes for the next intermediate output layer and so on, until the whole (intermediate) input layer has been processed.

The convolutional layers C may be structured as matrices with size preferably odd-numbered, such as *3x3* or *5x5* with a center position. The convolutional/de-convolutional layer may also have a depth that corresponds to that of the depth of the intermediate input to which it should be applied.

The size of the convolutional/de-convolutional layer is in general smaller than the size of the intermediate input on which it acts. Just like in conventional convolution, the convolutional layer may be conceptually thought to slide over its (intermediate) input layer and is applied selectively to different groups of nodes to produce filtered nodes as an (intermediate) outputs. The convolving operation itself may involve forming sums of products between the nodes of the convolution layer and /or all nodes within the instant group in its intermediate input layer. The filtered node is the central node of the odd-sized matrix of the convolutional layer.

The shifting to a new group of nodes in the processing of the convolutional layer may be conceptually understood as a sliding the convolution layer C with stride=*n* (*n* being a natural number) over the (intermediate)input to produce the (intermediate) output for each group nodes, respectively. The stride is a design parameter of the CNN that indicates the extent of each shift. For instance, stride *n*=1 means that the new group is obtained by effectively shifting the layer C by one node when redefining the connections for the next group of node whose values are to be convolved to obtain the value of the next (intermediate) output node. For stride *n*=2, one column or row of nodes is skipped and accordingly for n>2. It will be understood that, instead of the sliding window approach described above, the input layer to be processed by the convolution layer may be instead broken up open into parts (tiles), and each of these are then convolved with the convolution layer separately.

Zero padding may be used if the convolutional layer extends beyond the outermost nodes of its intermediate input layer on which it acts. The convolutional/de-convolutional layer may be applied in sequence as described or may be applied in parallel in the whole of the intermediate input layer.

The de-convolutional layer D is essentially an inverse operation to the convolution caused by the convolution layer C. Whilst the convolution layer maps, initially, from pixels to features of progressively higher level, the deconvolution operation maps features back down to pixels. Functionally, the deconvolution can be formulated in terms of convolution operations as used in the convolution layer discussed above which are then summed. See for instance section 2 in M D Zeiler et al in "Adaptive Deconvolutional Networks for Mid and High Level Feature Learning", 2011 International Conference on Computer Vision, Barcelona, Spain. The de-convolutional layer D may also be represented as a matrix with appropriate depth.

As such, the convolutional and de-convolutional layers do in general preserve the size of their (intermediate) input.

The down sampling layer is similarly structured as the convolutional/de-convolutional layers C, D, but they act on its input data differently. The down-sampling/up-sampling layer (also referred to herein as simply "down"-or "up-samplers") may be odd- or even-sized. The down sampling layer lumps together a group of nodes in the earlier layer to produce a single node for the subsequent output layer, thus reducing the spatial (less rows and/or columns) of the (intermediate) input layer. This can be done by forming an average or by picking the maximum/minimum value or any other designated value from the group of nodes covered. The size of the group corresponds to the size of the down sampling layer.

The up-sampler acts quasi-inversely to the down-sampler and produces at its output a larger set of nodes, preferably by interpolation between input nodes. Convolution/Deconvolution and the up-sampling/down-sampling functionality may be combined in the same layer. For instance, convolution and down-sampling may be achieved as a convolution with stride >1, such as 2 or larger. In a similar fashion, the deconvolution may be combined with the up-sampling functionality.

In general, in strand SI the number of up sampling layers in mapper section DC corresponds to the number of down sampling layers in the remapper section RC. In one embodiment the mapper section DC of SI includes three down sampling components and the remapper section includes three up sampling components. The same may hold true for the convolution/deconvolution layers C, D.

Generally, the last unit or layer in strand SI is a downsampler ↓ to arrive at the low dimensional representation R and this is then followed in the remapper section RC by at least one upsampler ↑. More generally, there is at least one downsampler in the mapping section and there is at least one upsampler in the remapping section. This "bottleneck structure" allows implementing the mapping/remapping principle in CNN based embodiments of the MLC. Alternatively, overcomplete variants of the AE architecture are also envisaged herein, where there is not necessarily a spatial down/upsampling, but where instead sparsity-based regularization is used, of which more further below at Fig 4. In addition, there may be at least one convolution layer C in the mapper section and at least one deconvolution layer D in the remapper section. The order of convolution and downsampler in the mapper section is preferably convolution first and then downsampling but this may not necessarily be so in all embodiments. Similarly, in the remapper section there is deconvolution first and then upsampling although this order too may be reversed in embodiments.

To be sure, the processing sections RC and DC are conceptually inverse, but will in general not yield unity, so RC$^{-1}$ ≠ DC.

In embodiments, the mapper section of SI includes three-layer units. Each unit comprises, in sequence, a convolution operator followed by another convolution, a down sampling and a rectification R. More or less than three of such units may be used instead in alternative embodiments.

In embodiments, in the mapper section DC, the convolution layers C have size *n x n x d* (or larger), preferably each followed by a rectified linear unit (ReLU). The spatial dimension could be any suitable number, such as 3,5, etc whilst the depth *d* is a function of color channels (if any) and the number of channels required for the reshaped imaging parameters IP, as will be explained in more detail below in relation to reshaper strand SP. Two or more convolutions layers C may be used to change scale. The last convolution of each scale may be done with stride 2 for down-sampling/downscaling. In the embodiment of Fig 3, three feature scales are realized as there are three pairs of up/and down-sampling operations in DC and RC, but, in alternative embodiments, more scales, or less scales are also envisaged.

The remapper section RC of strand SI may complementary mirror the structure of the mapper section DC and includes correspondingly the same number of units, but in each unit, each occurrence of convolution is replaced by de-convolution layer and each occurrence of a down sampling layer is replaced by an up-sampling layer. The last, down-stream, layer in the remapper section RC preferably ensures that the final output may also allow zero nodes. For otherwise, one is limited to larger than zero values because of the preceding activation layer R. This last layer may be implemented as shown as an additional convolutional layer C to provide the final remapping result, but this may be optional. Preferably, this last convolution has size *1x1x1*.

In embodiments, in the remapper section RC 3x3x3 (or larger filters) deconvolution layers D are used, preferably each followed by a rectified linear unit (ReLU). Two or more deconvolution layers D may be used to reverse scales as changed in the mapper section DC. The last deconvolution of each scale is done with stride 2 for up-sampling/upscaling. The number of scales in the remapper RC section is usually equal to the number of scales in the mapper section.

Preferably but not necessarily in all embodiments, a typical number of convolution filters in each layer in scale s is $(2^3)^s c$, where *s* = 1,2,3,... is the scale (the input scale equals 1) and c is a network control parameter, where we found that usually the best performance is obtained in an over-complete setting, in which *c* > 1.

Other combinations or other arrangements of functional layers in the two sections DC and RC of the SI are also contemplated herein, but preferably the number of up sampling and down sampling layers and/or the convolution and deconvolution layers in the two sections DC, RC are, respectively, the same.

We now turning now in more detail to reshaper strand SP where the imaging parameters Ip are processed. The reshaper strand SP includes, in embodiments, three hidden layers. Specifically, there is envisaged, in sequence, a fully connected layer FC which is followed by a rectification layer R which is in turn followed by a second fully connected layer FC. A single fully connected layer may be used instead, or more than three hidden layers, in particular more than 2 FCs, may be used.

Functionally, the imaging parameter strand SI is configured to act as a re-shaper of the set of imaging parameters. In other words, at output OL of strand SP a "pseudo-image" is formed based on the parameter values Ip received at its input layer IL. The imaging parameters are reformatted into a matrix/tensor with size equaling the input image IM. This pseudo-image is then merged as indicated by arrow f1 (or "feedline") with the initial image data IM received at the input layer IL of the SI strand. In addition or instead, there is a (second) feed-in f2 into the first layer (e.g., deconvolver D) of the remapper section PS. In other word, the pseudo-image may be remerged with the representation R produced at the output of the mapper section DC. In other word, the reshaped imaging parameters are preferably used for both, the mapping DC strand and the remapping strand RC.

Convolutional layers have a certain depth and can act on a multi-dimensional layer. The depth of convolution may correspond to the number of channels of the imagery to be processed. For instance, a convolutional layer applied to a color image may have a depth of three so as to serve each of the three color channels RGB. The convolution operations in each of the three layers may be different for each channel.

In embodiments, it is proposed herein to include the reshaped image parameters (that is, the pseudo image) as additional channels into the input imagery IM and to configure the convolutional/de-convolutional layers in the SI section to have an additional depth that is configured to process the pseudo-image that is the reshaped image parameters. In this sense the imaging parameters and the actual image data in IM are merged into a multi-dimensional compounded image where the imaging parameters are included as an additional dimension or layer into the actual image data. This allows the compounded image to be processed by multi-channel convolutional/de-convolutional layers whose depth corresponds to the actual dimensions of the image data IM plus one (or more) dimension(s) for the imaging parameters.

In embodiments, the reshaper SP reshapes the output of the last fully connected layer FC to a representation of one or more matrices or volumes or tensors, which may be called herein an "imaging parameter volume". The size of each imaging parameter volume equals the size of the input image IM. The imaging parameter volumes are fed in additional channel(s) to the imaging strand IS. The number of additional channels corresponds to the number of imaging parameter volumes produced by the reshaper SP. The feeding-in into the strand SI may be done by populating each output value of the last fully connected layer FC to a separate imaging parameter volume, where in each case, the respective entire volume is filled-up by the same output value. Other embodiments of merging image data IM with non-image data *Ip* are also envisaged. Using the above described multi-channel technology in the context of CNNs is merely one embodiment. However, similar applications of the above merging technique in more general NN or non-NN contexts are also envisaged herein.

The imaging parameters, as applied to the input layer of strand SP, may be represented in one or many more dimensions. The imaging parameters are preferably encoded in a suitable numeric format or may be so mapped from classes to numeric values. The imaging parameters provided as one or more vectors or matrices at the input layer IL in strand SP of network MLC. The dimension of the vector or matrix, or indeed tensor in general equals that of the image data IM.

In sum, in the MLC as per Fig 3, features across layers are fused to define a nonlinear local to-global representation that could be optimized end-to-end. The image is analyzed in in multi-scale manner, starting from local feature to higher scale, global features. All this multi-scale analysis is represented preferably in a single network MLC that is preferably optimized from initial input to final output, as opposed to optimizing each scale separately.

Although in the above described layout for the MLC in Fig 3 the SP strand for processing the imaging parameters is integrated together with the imaging strands SI into the same network, this may not necessarily be so in all embodiments. Although full integration of the two strands SI, PS into a single network MLC is preferred, the processing as per strand PS may be handled separately in a different network (not shown). It is only the results (the reshaped imaging parameters as pseudo-images) that are then supplied as input to the MLC configured as per strand SI.

As further alternative embodiment, combinable with any of the above, rather than reshaping the imaging parameters into pseudo-images, a different layout is envisaged, where it is the images IM that are reshaped into pseudo-parameters and these are then merged with the "true" imaging parameters Ip.

Discussing now in more detail the training mode of the imaging processing system IPS, and, in particular of the MLC, reference is now made to Fig. 4. The Figure shows a schematic block diagram of a training arrangement for the MLC. The arrangement includes a training module TC to implement the training procedure.

Broadly, in the training sequence, training imagery TI is applied at the initial input layers IL as discussed in Fig. 3. The training imagery and its imaging parameters are then propagated through the machine learning component also as discussed above. The previously discussed reshaper PS and merging f1,f2 may be used when feeding the imaging parameters Ip though the MLC. At this stage it is assumed that the MLC is in an initial configuration. The initial configuration can be achieved by populating the MLC with any values such as random weights, parameters etc. The architecture of the MLC, that is, the number and types of layers, the specific sequence, their sizes etc., are specified by a user as per any one of the above discussed embodiments in Fig 3.

The learning mode is essentially an optimization task. The goal is to find the best configuration, that is, the best set of parameters and weights for the MLC. Optimization algorithms exist to search the parameter space to find the best configuration or a configuration at least better than an agreed "goodness". The goodness is measured by a suitable optimization criterion in terms of an objective function that maps any given configuration to a scalar value or score to so quantify the goodness.

The optimization proceeds preferably iteratively and in each iteration step some or all of the initial parameters are adjusted (or updated) to achieve an intermediate configuration, also called a candidate configuration. It is then checked by the training component TC whether the current intermediate configuration (also referred to herein as a candidate configuration) is good enough, based on a threshold for the score or other stopping condition. One may for instance check whether the objective function yields, for the current intermediate configuration, a value less than an error threshold. This is one example for a stopping condition. If the current intermediate configuration is good enough, the iterative optimization procedure terminates for the current training image. The training procedure ends. If the current intermediate configuration does not fulfill the stopping condition, the optimization enters a new iteration cycle, and so on. This procedure is then repeated in a second loop for another training image, and so on until all or a sufficient number or training images in the corpus have been processed. Once the second loop terminates, the MLC is deemed fully configured for deployment and is output.

Although the term optimization is used herein this does not necessary imply that a global overall optimum in parameter space is found. In fact, usually a local optimum is found and not a global one. Alternatively, in some cases not even a local optimum is found, but the iterations are simply aborted once a stopping condition is fulfilled, such as a fixed number of iterations or if sufficient convergence in the sequence of intermediate configurations is established.

The objective function may be formulated as a cost function. The cost function may have the structure of an overall error sum, where each summand corresponds to an error incurred by a given test image from the corpus of all test images. The configuration is then adjusted so that the overall sum is optimized. When the optimization is formulated as cost function, the optimization is to minimize the cost function. The cost function may be deemed optimized if the cost falls below a predefined threshold. However, it will be understood that reformulations of the optimization in terms of utility and maximization are also envisaged in alternative embodiments.

More specifically, the objective function may be formulated as an error function $L$ and may be written as $L(\theta) = \sum_{i,j} \mu(TI^i - t^j)$, where $\theta$ are the parameters that define the configuration of the MLC, the index $i$ runs over all training images ($TI^i$ being the $i$-th instant in the corpus of training imagery), $t^j$ being the $j$-th target and $\mu$ a suitable similarity measure that quantifies a difference between the input TP at input layer IL and the target $t^j$ at the output layer OL. $\mu$ may be the Euclidean square distance, $(x-y)^2$ or more generally may be based on any suitable $Lp$ norm, $p$ other than ½. Any of the above discussed similarity measures in connection with the comparator COMP may be used.

In MLC embodiments that are configured according to the mapping/remapping principle (such as in autoencoder AE embodiments) as explained above in Fig 3, there is only a single target $t$ and this equals the input image which the remapper attempts to recover . Preferably, in the cost function, only the real images are compared, and not the imaging parameters. The imaging parameters are used herein to act as additional information in the mapping/remapping to ensure that acquisition and/or reconstruction parameters are learned alongside the imagery for more robustness.

In other ML embodiments, MLC may be configured as an CNN or a general NN with a two-node output layer for targets t1, t2, these now being the normal and anomalous image classes and the MLC may then need to be fed with imagery from both classes. More than two classes $t^j$ ($j > 2$) may be considered for classification, soft or hard, in other embodiments. Instead of classification, the MLC may be configured to yield regression results, e.g. measurements such as blood perfusion in angiography or, to mention a non-medical application, expected oil yield when analyzing geological imagery.

In either of these embodiments, after forward-propagating the i-th test image $TI^i$ through an initially configured MLC, the result appears as output at the output layer OL. Referring again to the mapper/remapper embodiments such as the CNN-based autoencoder as discussed above, the overall output is the second image $TI^i$ which is the attempted recovery of the initial input image $TI^i$. As discussed before in relation to Fig. 3, the initial training input image $TI^i$ can be compared by comparator COM with the second image $TI^{i'}$ at output OL, using the similarity measure $\mu$ in the objective function $L$. The similarity as quantified by measure operator $\mu(.)$ is recorded as one of the summands of the error function $L$. A back propagation can then be used to back-propagate the recorded error into the MLC to adjust accordingly some or all of the parameters in the current configuration.

Many variants of the backpropagation algorithm exist, and all are included herein. Some approaches use a gradient descent method where the search through parameter space is guided by the gradient of the objective function. However, the optimization for training may not necessarily include backpropagation in all embodiments, and other optimization schemes may be used instead. Other optimization schemes such as conjugate gradients, maximum likelihood, EM-algorithm or any variants or combinations thereof are all envisaged herein in embodiments.

Once all of the parameters in the current configuration are adjusted or updated, the previously used test image $TI^i$ is then again forward propagated through the MLC, but this time with the updated configuration. Again, a new second image $TI^{i''}$ is received, and this can be again back-propagated and processed as described, and the training module TC iterates in a first loop in one or more iterations forward-and backwards with configuration updated for a given test image $TI^j$ to so adjust the initial configuration.

In addition to the back-propagation loop for each test image, the training arrangement TC in Fig. 4 further loops over the remaining test images TI in the corpus of test images. In other words, the training arrangement TC implements a double loop, one over the back propagation for each image and the other, outer loop, over the input imagery corpus. The input images may be fed in parallel into the MLC or may be fed into the system one by one in sequence. The order in which the test imagery TI is processed is in general arbitrary.

It will be understood that each error contribution incurred by each testing image is recorded in the overall sum of all errors in the objective function L as explained above. In other words, when processing a next training image $TI^{i+1}$, the error incurred by a previous training image $TI^i$ processed in an earlier cycle is not forgotten, as the error contribution of the previous training image $TI^i$ remains recorded in the overall error sum and will be accounted for when processing the next $TI^{i+1}$ training images, and all other training images $TI^{k>+1}$.

Preferably, in the auto encoder in the embodiment in Fig. 3, the training images TI are all taken from the same category. For instance, and continuing our exemplary embodiment for anomalous and normal classes, the training images TI are all drawn in a preferred embodiment from a repository to represent normal anatomies. In an alternative to this and dual thereto, the MLC may be trained based on imagery drawn only from a corpus of imagery that represents anomalous anatomies.

It will be understood that the test imagery preferably all represent the same region of interest such as chest, brain or heart, etc. Whole body imagery may also be used, but the training procedure may take much longer as the pattern to be captured will be much more involved.

In embodiments the MLC is trained separately for training imagery based not only on different anatomies but also according to age range, sex, or other patient characteristics. For instance, one MLC may only be trained for chest images for female patients. A second MLC may then be trained for chest imagery for male patients. This can be repeated for different regions of interest corresponding to different parts of the human/animal anatomy. The result of the test procedure is then a collection of different MLCs, each trained for different patient groups and/or anatomies. Later, in deployment, a user may select prior to a recognition job, through suitable input means such as text-based or graphical user interfaces, the anatomy of the new image and/or the patient group, if known.

It will be appreciated that sequestering suitable test imagery of a single category may be done efficiently by querying computerized patient and imager repository such as maintained by hospitals. These systems store patient data and imagery, acquired over the course of many years. Diagnostic entries for patients may then be queried by using a suitably framed search string expressed in a query language to find normal or anomalous imagery and these are then retrieved from the databases and supplied to the MLC as described above. Suitable data repositories DB data is archived, including a picture archiving and communication system or PACS, an electronic medical record or EMR, a radiology information system or RIS, a hospital information system or HIS, etc.

Specifically, entries in patient records such as "discharged as healed" etc. may be queried for to find training imagery TI that represent normal cases. This imagery may relate to patients that have recovered or patients that had been imaged but it turned out later that there was no medical condition, etc. The search query to find suitable test imagery of a single category may also be based on information included in the header files of the imagery itself such as is the case of images in the DICOM format.

It will be appreciated that for the mapping/remapping embodiments such as the autoencoder, no manual and/or explicit labeling of the input imagery is required because training may be confined to imagery from a single class or category, unlike in other machine learning applications. In particular, no explicit labeling is required. Instead, running a suitable search in a database for medical imagery is all that it takes to perform the training in the proposed mapper/remapper embodiments. One may hence refer to the proposed system in Fig. 4 as an instance of unsupervised learning. Explicit labeling such as in image recognition task for autonomous driving, for instance, is not required herein which allows achieving high throughput and quick training of the MLC.

Although the above described optimization for training purposes of the MLC works well in many instances, better results have been reported by introducing suitable constraints SC in the above described optimization scheme.

In one embodiment, a sparsity scheme is enforced, where solutions in parameter space are favored that lead to sparser configuration. The constraint module SC may be arranged as a functional component to be used in addition to the objective function L when performing the optimization. The constraint module SC may encourage to converge towards configurations with lower sparsity. A configuration is said to be sparser than another one if it has more node (final or intermediate) outputs set to zero (or to at least less than a certain threshold) by the activation layer(s). The proposition is to use as few of the nodes as possible to still satisfy the objective function. Otherwise, if the optimization proceeds unconstrained, it has been observed that the optimization schemes used may converge to more complex configurations, with more nodes required to fire than necessary. This may lead to over-fitting where the system is merely remembering each image in other training sequence rather than learning the overall underlying pattern.

One embodiment that has been used to favor a less complex solution is requiring the hidden layers to be generally smaller, much smaller than the input imagery IM. In other embodiments the hidden layers may be chosen as large as the imagery itself, but suitable sparsity functions or sparsity constraints are improved to encourage more simple solutions.

Yet in other embodiments, the hidden layers are chosen smaller than the dimension of the input imageries and there are still used explicit sparsity constraints functions to regularize or control the optimization as described above.

Suitable sparsity schemes envisaged herein may be realized by re-formulating the training cost function L as per:

$$L(\theta) = \sum_{i=1}^{n}\big(\|t_i - y_i\|_q + \lambda\|r_i\|_p\big),$$

where i runs over training images $TI^i$, where $\theta$ are the parameters (weights, etc) for a configuration of the MLC, $t_i$ is the target output(in this case, the input training image $TI^i$), $y_i$ is the final output being an attempted reconstruction of the training image $TI^i$, $r_i$ is the final result of the mapper SI part (i.e., the central representation R), $\lambda$ is a control parameter that controls the aggressiveness of the regularization, $p$ set the $p$-norm of the regularization term, where $p \leq 1$ leads to a sparse representation, and $q$ set the $q$-norm of the fidelity term, where a common value could be $q = 2$ or $q = 1$, which may enable the network to be less sensitive to potential anomalies that might be included in the training corpus. $\|r_i\|$ is small if it comprises a large proportion of zero values, that is, if there were few nodes firing in the previous activation layer R, thus enforcing sparsity.

In addition to or instead of the above described embodiment of explicit sparsity enforcement by an explicitly formulated functional component SC, an implicit sparsity scheme is envisaged herein in some embodiments. It has been found that a sparsity paradigm may also be pursued by preparing the input imagery TI in a special way. This embodiment may be called "auto-mixing" where a given input image $V_i$ is mixed by a combiner COMB with other imagery from the corpus to obtain a mixed image $V_i'$. The MLC is then optimized to recover the given training image from the mixed image during training. In other words, in training, $V_i'$ is chosen as input and the "uncorrupted" image $V_i$ the target. More specifically as envisaged herein, for a given training image $V_i$:

$$V_i' = V_i + \alpha V_j + \beta,$$

Where $V_i'$ is a combo-image combined from additional component images where $V_j$, $V_i$ from the training corpus that may be randomly selected, and $\alpha$ and $\beta$ are mixing parameters, where usually $0 < \alpha < 1$. More than one additional samples may be used. $\beta$ is an optional parameter that may be used to ensure conformity with certain units, such as HU (Hounsfield units) or other.

The auto-mixing may be understood as a target corruption to foster sparsity. The corruption could be done once, or it could be done again for each epoch (cycle over complete corpus of training images). The so corrupted samples $V_i'$ or combo-image are used to train the network MLC.

The auto-mixing is achieved in embodiments by linear combination or by affine combination, as illustrated above. It will be understood, however, that other functional combinations may be used instead, rather than affine or linear ones.

The component images $V_j$ that are auto-mixed with the first image $V_i$, may be selected from slice images from different z positions from the same CT volume for example. For instance, if $V_i$ is associated with position $z_i$, then the component images may be drawn from $n$ follow up positions at $z_k > zi$, $k=1...n$. Alternatively, the component images $Vi, Vj$ may be drawn for previous positions $z_k < z_i$. As a further alternative, one or more component images are drawn from $z_k < z_i$ and other, one or more are drawn for $z_i < z_k$.

In yet other embodiments, the mixed-in images are images obtained at different times, as recorded in time series $t$ image data, such as (2D,$t$) or a 4D volumes. As above in the spatial embodiments, a given image at time $t_1$ may be mixed with chronologically earlier, or later component images, or with both.

The auto-mixing embodiment may also be used in other neural network architectures than the one in Fig. 3. In Fig. 3 the optimization or training component TC runs an optimization algorithm according to any one of the above described embodiments. The training component may or may not include a sparsity enforcer IC configured as described above.

The training of the MLC may be done in a one-off operation or may be repeated in new training imagery or may be repeated once performance of the MLC deteriorates during deployment.

It will be understood that the MLC and/or its training may be implemented suitably in multi-processing units such as GPU or others. GPU's (graphical processing unit) or TPU's (tensor processing units) are optimized to perform tensor or matrix operations (which are series of dot products). It has been found that tensor or matrix operations can be used with benefit for training or deployment. GPUs, TPUs or similar microprocessors are in general optimized for parallel computing such as in multi-core systems.

Suitable circuitry to implement the above described systems software arranged on a computing device such as a stationary computer, a workstation, for instance a laptop, handheld device, tablet or others.

The proposed deployment and/or training may also be implemented in a client-server based environment. In particular, the training or deployment may be performed by one or more servers in a cloud based architecture.

In addition to software based circuitry the systems for deployment or training as described above may also be implemented as hard coded micro-chips. Specific circuity such as application specific integrated circuitry ASICS Circuitry may be used. A system-on-a-chip (SOC) may include discrete and/or integrated circuitry, and combinations thereof. In an alternative embodiment, the circuity may include suitably configured field-programmable gate array FGPA's.

The trained MLC may be held in a central memory MEM or may be distributed in a plurality of servers or memory devices preferably connectable to an end user computing device (laptops, smart phone, desktop computer, etc.) to request execution of the training and/or deployment according to any one of the above described systems.

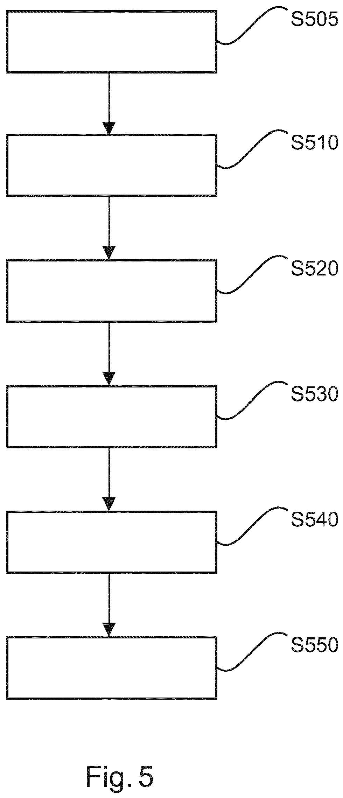

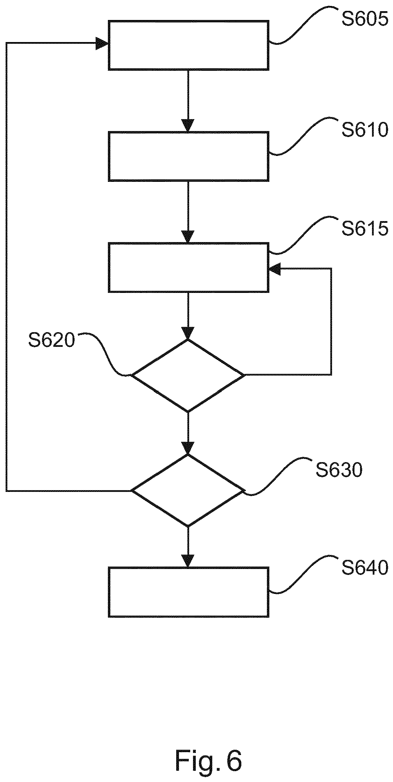

Reference is now made to the flow charts in Fig. 5 and 6. The flow chart in Fig. 5 relates broadly to a method of image processing. In particular, the flow chart depicts aspects of the deployment phase as described above for the various systems in Figs. 1-4.

The flow chart in Fig. 6 relates to an image processing method according to a different embodiment and preferably to a training phase of any one of the described MLC based systems in Fig. 1-4, in particular Fig. 4.

It will be understood however that the methods described below may also be understood as respective teachings in their own rights and hence are not necessarily tied to the architectures as per Figures 1-4 above.

Referring first to the image processing method in Fig. 5, at step S505 an initial input image to be analyzed is received along with imaging parameters Ip that describe how the initial image IM was obtained.

The image IM together with the imaging parameter(s) *Ip* are then processed in step S510 by a pretrained machine learning component. The machine learning component may be an NN, in particular a CNN or more particularly an auto-encoder AE. Preferably, the initial input image is new, which means that it is not among the training images previously used to train the machine learning component.

At the conclusion of the processing, the MLC produces a processing result that is output at step S530.

This processing result may be used for regression or classification of the initial image or of at least a part of the image.

The result produced by the MLC may be presented in various forms or data structures. For example, in the above discussed MLC components that are configured according to the mapper/remapper principle (such as autoencoder networks), the processing result is the attempted recovery of the initial input image in form of the second image IM'. In other embodiments, the result may comprise other readings that represent data from which a classification or regression result may be obtained.

The data may form in themselves the regression of classification or the method may include an optional step S540 where the MPC processing result is converted into an indication for the regression or classification, either for the input image as a whole or for (only) a part thereof. The image part may be formed by individual image elements such as voxels or pixels, or group(s) of such image elements. The classification may be a hard (that is, binary) one or a soft one.

A soft classification may include a probability map for a category or class. Entries in the map are associated with respective image elements or group of image elements of the initial image. Each entry represents an indication of a probability for the associated element or group to be of the class or category.

In embodiments there is a step S550 where the processing result or the converted results are graphically rendered and displayed on a display device. For instance, the probability map may be displayed concurrently with the initial image, preferably superimposed on the initial image.

As mentioned, in embodiments (such as the auto-encoder), the processing step S510 includes obtaining by the pre-trained machine learning component MLC a first representation of the input image and in a further step an attempt is made to recover from the said representation the input image to obtain the second image.

In one (not necessarily all embodiments), this can be done by first encoding or mapping the initial input image into a lower dimensional representation and to then remap this lower dimensional representation back to obtain the second image in attempt to recover the initial input image. SVM or other ML techniques may be used instead or in addition to the autoencoder. A variation of a principle component analysis may also be used, where the principal components form the representation.

The second image may differ from the initial input image. The method may include an optional step S520 where the initial input image and second image are compared by computing a similarity measure. The similarity measure in configured to quantify a difference between the two images. The similarity measure may then be output as the processing result at step S530.

The conversion step S540 may then include locally resolving the similarity quantification to image element level (or groups thereof) or the similarity quantification may be computed globally for the whole image. In the soft classification embodiment, the probability map is computed by converting the similarity measure amount into a probability. That probability indicates for instance, whether or not the image as a whole or a part thereof is indicative of a certain class.

Alternatively, a regression result is computed based on the computed similarity measure.

In one embodiment, only two classes/categories are considered, one being complimentary to the other. In one embodiment medical imagery is processed as indicated above and the classes correspond to "normal" or "anomalous" for a given anatomy or ROI. The above-mentioned probability value may thus indicate whether the whole image or a part of the image is indicative of a normal condition or whether the patient presents with an anomaly, such as a medical condition.

In other, medical applications or in non-medical fields, the similarity measure may be converted into a regression result, for instance into a quantity of interest for the image as a whole, or for a certain image location.

In embodiments in the step S510 of processing the input image and its imaging parameters may include merging respective results obtained by the machine learning component when processing together the input images and their imaging parameter(s). The processing may be structured in two or more processing strands, one for the image data and one for the imaging parameters. Preferably the strand for the image data processing is arranged according to the mapping/remapping principle. In the other, the imaging parameter strand, the imaging parameter(s) are reshaped or reformatted to obtain as an intermediate result a pseudo-image. This pseudo-image may then be fed into the image data processing strand at any stage. The feeding-in may include merging the pseudo-image with the initial image data or with any other (intermediate) result obtained during processing of the image data in the strand. The pseudo-image may be fed-in more than once. In one embodiment, the pseudo-image may be fed in upstream the stage where the representation R is obtained and/or down-stream that stage. Alternatively, it is the image data that is reshaped and fed-in and/or merged into the imaging parameter strand.

Preferably, the merging can be implemented by presenting the imaging parameters as an additional channel to one or more channels in the image. The image processing strand in the machine learning component is then presented with multi-channel representation of the image that includes as one channel its own imaging parameters.

In one particular embodiment, where a convolutional layer is used in the neuro-network, the imaging parameters are formatted so that they can be treated by the system as an additional "virtual" color channel in addition to color channels in the image. The same can be applied for mono-chromatic images where the imaging parameters form a second channel instead of a fourth or higher channel for color imagery.

Merging the imaging parameters with the image data as proposed herein is useful for the convolution layer as this is a local operator. The merging enables the imaging parameters to include more than one (in particular all) convolution operations. The reshaping creates different, new channels, so that the imaging parameters can be included in convolutions, performed at different locations on the input processed by the convolution operator.

Turning now to the training process, reference is made to the Fig. 6 flowchart.

At step S605, one or more training images TI are received from a corpus of training images. Preferably, the training images include only imagery from a single class or category. In one embodiment this class corresponds to normal imagery or abnormal imagery for a given anatomy. The anatomy may include for instance, chest, brain, heart or other anatomies of ROIs. In addition to the one or more training images, their respective imaging parameters are also received at step S605.

At step S615 the training component is trained by providing to the machine learning component the input image and the imaging parameter. In one embodiment the training at step S615 includes adjusting a configuration of the machine learning component.

The configuration is adjusted so, as to decrease a difference or error between a target and an output provided by the machine learning component after having processed the input image and its training component.

The error may be expressed in terms of an objective function. In mapper/remapper embodiments (such as the autoencoder), the target is the input image or a derivate thereof. In these embodiments, the error in the objective function may be expressed in terms of the similarity measure used in the comparator COMP. However, the training is not necessarily confined to auto-encoders but other neuro-network or machine learning architectures may also be used with benefit herein.

In embodiments the adjustment of the configuration is based on gradient descent algorithm or any other optimization algorithm. In particular embodiments thereof, a backpropagation step is used where the difference is split up into contributions which are then fed back into the machine learning component in the backpropagation step to so adjust the configuration.

The configuration of the MLC as used herein includes all parameters, weights etc. that make up the machine learning component. Before an initial input image is fed in, the MLC is populated with an initial configuration. This can be done by assigning arbitrary weights, or random weights, or other, to the various nodes, placeholders of the machine learning component whose architecture has been pre-defined. In embodiments, the architecture is as discussed above in connection to Figs 3,4.

The adjusting of the configuration may proceed iteratively in a first loop through one of more steps of a given training image and its imaging parameter.

In a step S620, a stopping condition is evaluated. If the stopping condition is met, the first loop is aborted.

In step S630 it is determined whether all training images TI have been processed. If not, work flow returns to step S605 and the training procedure is repeated for further one or more input images.

Once all images have been processed, the training procedure terminates at step S640 to output the pre-trained machine learning component.

In other words, the training method may proceed in two nested loops: one inner loop to iterate the optimization for a given training image, and another, outer loop, for iterating through the corpus of training images.

In one embodiment the step S615 of training the component includes applying a sparsity constraint. The sparsity constraints encourage steering the optimization step towards candidate configurations with lower sparsity. In other words, from two configurations that both satisfy the objective function, the one with the lower sparsity is preferred. In the above embodiment the difference is expressed in terms of an objective function. Preferably, the objective function classifies the difference between the input and output.

In one embodiment the above training method includes an implicit sparsity enforcement which does not require an explicit functional component to enforce sparsity. More particularly, the proposed implicit sparsity enforcement is achieved by suitably preparing the input training imagery. In one embodiment this includes a preparatory step S610, where a first training image from the corpus is combined with one or more of the other training images from the corpus to obtain a combo-input image. In this embodiment, the machine learning component S620 is then trained by providing the combo image as input and the first image as target. In other words, in the auto-encoding embodiment the auto-encoder is trained to recover a component, for instance the said first image, from the combo-image. This auto-mixing based training scheme has been found to yield sparsity results without the necessity to use a specific functional component for sparsity enforcement.

Although the auto-mixing step S610 had been found to yield good results without using explicit functional sparsity enforcement, this can still be combined with such functional components as envisaged in alternative embodiments.

In embodiments where the autoencoder is used, or where an auto encoder like neuro-network is used, it is preferable to have the above discussed bottleneck structure with the mapper strand IS including at least one down sampler so that the (central) representation R for the initial image has a smaller dimension than the input image. This forces the autoencoder AE to produce a representation that may capture at a sufficiently general level, patterns or features which are thought to underlie the class of interest one wishes to model, such as normal or abnormal imagery.

However, as has been found herein, the auto encoder scheme can also be used with over-complete network architectures, where the hidden layer, in particular the last layer of the encoding arm, is spatially larger than the input image. When such over-complete versions of the auto encoder AE are used, it is preferable to apply a sparsity scheme to prevent over fitting and provide results that generalize well. In this embodiment the above described auto-mixing preprocessing has been found to be of benefit but other sparsity schemes (also explicit ones) may be used instead or in addition.

In another exemplary embodiment of the present invention, a computer program or a computer program element is provided that is characterized by being adapted to execute the method steps of the methods according to any one of the preceding embodiments, on an appropriate computerized system.

The computer program element might therefore be stored on a computer unit, which might also be part of an embodiment of the present invention. This computing unit may be adapted to perform or induce a performing of the steps of the method described above. Moreover, it may be adapted to operate the components of the above-described apparatus. The computing unit can be adapted to operate automatically and/or to execute the orders of a user. A computer program may be loaded into a working memory of a data processor. The data processor may thus be equipped to carry out the method of the invention.

This exemplary embodiment of the invention covers both, a computer program that right from the beginning uses the invention and a computer program that by means of an up-date turns an existing program into a program that uses the invention.

Further on, the computer program element might be able to provide all necessary steps to fulfill the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section.

A computer program may be stored and/or distributed on a suitable medium (transitory or non-transitory), such as an optical storage medium or a solid-state medium supplied together with or as part of other hardware, but may also be distributed in other forms, such as via the internet or other wired or wireless (tele-)communication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

**Claims**

1. A system for image processing, comprising:

   one or more input interfaces (IN) for receiving i) an input image and ii) an imaging parameter that describe how the input image was obtained; a pre-trained-machine learning component (MLC), configured to process the input image and the image parameters to obtain output data that facilitates classification or regression in respect of at least a part of the input image (IM); and an output interface (OUT) for outputting said output data.

2. System of claim 1, wherein the system comprises a conversion component (CC) that converts the output data into a classification or regression result.

3. System of claim 1 or 2, wherein the machine learning component (MLC) is configured to include two processing strands, one for the input image and one for the imaging parameter, wherein the processing by the machine learning component (MLC) includes merging a result from one of the strands with an input or a result of the other strand.

4. System of any one of the previous claims, wherein the machine learning component (MLC) is arranged as a neural network, in particular as a convolutional neural network.

5. System of claim 4, where the machine learning component (MLC) is arranged as an autoencoder network.

6. A system for training a machine learning component, comprising:

   an input interface for receiving i) at least one training image obtained from a corpus of images and ii) an imaging parameter that describes how the at least one training image was obtained; a training component (TC) configured to train a machine learning component based on i) the at least one training image and ii) the imaging parameter as input for the machine learning component.

7. System of claim 6, the training component (TC) configured to adjust a configuration of the machine learning component so as to decrease a difference between a target and a second image that is output by the machine learning component.

8. System of claim 6 or 7, wherein the training component (TC) includes a sparsity constrainer (SC) to regularize the training of the machine learning component by the training component (TC).

9. System of claim 7, wherein the target equals the at least one training image.

10. A system for training a machine learning component, comprising:

    an input interface (IN) for receiving training images obtained from a corpus of images; a combiner (COM) configured to combine a first training image with one or more of the other training images to obtain at least one combo-input image; a training component (TC) configured to train a machine learning component (MLC) based on providing to the machine learning component (MLC) the at least one combo-input image as input and the first image as a target.

11. System of claim 10, the training component (TC) configured to adjust a configuration of the machine learning component so as decrease a difference between the target and a second image that is output by the machine learning component.

12. System of claim 10 or 11, wherein the TC includes a sparsity constrainer (SC) configured to favor, from two candidate configurations, the one with a lower sparsity.

13. System of any one of claims 10-12, wherein the training images are of the same category.

14. System of image processing, comprising:

    an input interfaces (IN) for receiving an input image; a pre-trained machine learning component (MLC), configured to process the input image to obtain a first representation of the input image and configured to attempt recovering from said first representation the said input image to obtain a second image as output; and a comparator (COMP) configured to compute a similarity measure that quantifies at least a local difference between the input image (IM) and the second image (IM').

15. System of claim 14, comprising a conversion component (CC) configured to compute a classification or a regression in respect of at least a part of the input image (IM), based on said similarity measure.

16. System of claim 14 or 15, comprising a visualizer (VIZ) configured to render on a display device (DD) a visualization of the classification or regression.

17. System of claim 16, wherein the visualization includes a map superimposable on the input image, the map configured to provide the visualization of the classification or regression per image location of said input image.

18. System of claim any one of claims 14-17, wherein computing by the comparator (COMP) of the similarity measure includes computing any one or a combination of i) at least one statistical or probabilistic quantity, ii) at least one information-theoretic quantity, iii) at least one difference image value.

19. System of claim any one of claims 14-18, wherein the machine learning component is configured to process the input image (IM) together with an imaging parameter (Ip) that describes how the image was obtained.

20. Method of image processing, comprising:

    receiving (S505) i) an input image and ii) an imaging parameter that describe how the input image was obtained;
    processing (S510), by a pre-trained-machine learning component (MLC), the input image and the image parameters to obtain output data that facilitates classification or regression in respect of at least a part of the input image (IM); and
    outputting (S530) said output data.

21. Method of training a machine learning component for image processing, comprising:

    receiving (S605) i) at least one training image obtained from a corpus of images and ii) an imaging parameter that describes how the at least one training image was obtained;
    training (S615) a machine learning component based on the at least one training image and the imaging parameter as input for the machine learning component.

22. Method of training a machine learning component for image processing, comprising:

    receiving (S605) training images obtained from a corpus of images;
    combining (S610) a first training image with one or more of the other training images to obtain at least one combo-input image;
training (S615) a machine learning component (MLC) based on providing to the machine learning component (MLC) the at least one combo-input image as input and the first image as a target.

23. Method of image processing, comprising:

    receiving (S505) an input image;
    processing (S505), by a pre-trained machine learning component (MLC), the input image to obtain a first representation of the input image and configured to attempt recovering from said first representation the said input image to obtain a second image as output; and
    comparing (S520) at least a local difference between the input image (IM) and the second image (IM'), based on a similarity measure that quantifies said difference.

24. Using an output of a decoder stage of an autoencoder network (MLC) to classify an image.

25. Any system or method of any of the foregoing, wherein the input image or training image is medical.

26. Any system or method of any of the foregoing, wherein categories of the classification include at least one of normalcy and anomaly for a given anatomy.

27. At least one computer program element, which, when being executed by at least one processing unit (PU), is adapted to cause the processing unit (PU) to perform a method as per any one claims 20-23 or the said use as per claim 24.

28. Program element of claim 27, wherein the processing unit (PU) is of a multi-core design.

29. At least one computer readable medium having stored thereon the program element of claim 27 or 28.

Fig. 1

Fig. 2

Fig. 3

Fig. 4

S505

S510

S520

S530

S540

S550

Fig. 5

Fig. 6

**EP 3 576 050 A1**

Europäisches
Patentamt

European
Patent Office

Office européen
des brevets

# EUROPEAN SEARCH REPORT

Application Number

EP 18 17 4690

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Anonymous: "Deep Learning - Wikipedia", , 11 May 2018 (2018-05-11), XP055492022, Retrieved from the Internet: URL:https://de.wikipedia.org/w/index.php?title=Deep_Learning&oldid=177350696 [retrieved on 2018-07-12] * the whole document * | 1-5,20, 24-29 | INV. G06T7/00 |
| X | Anonymous: "Multimodal deep learning techniques using EXIF data/metadata in addition to visual data for image classification, detection, or segmentation - Cross Validated", , 9 July 2017 (2017-07-09), XP055492240, Retrieved from the Internet: URL:https://stats.stackexchange.com/questions/290677/multimodal-deep-learning-techniques-using-exif-data-metadata-in-addition-to-visu [retrieved on 2018-07-12] * the whole document * | 1-5,20, 24-29 | |
| A | WO 2017/122785 A1 (PREFERRED NETWORKS INC [JP]) 20 July 2017 (2017-07-20) * paragraph [0015] - paragraph [0061] * * paragraph [0096] - paragraph [0102] * | 1-5,20, 24-29 | |

TECHNICAL FIELDS
SEARCHED (IPC)

G06T

~~The present search report has been drawn up for all claims~~

| Place of search | Date of completion of the search | Examiner |
|---|---|---|
| Munich | 25 July 2018 | Rockinger, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

28

Europäisches
Patentamt

European
Patent Office

Office européen
des brevets

Application Number

EP 18 17 4690

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 20, 24-29

☐ The present supplementary European search report has been drawn up for those parts of the European patent application which relate to the invention first mentioned in the claims (Rule 164 (1) EPC).

Europäisches
Patentamt
European
Patent Office
Office européen
des brevets

**LACK OF UNITY OF INVENTION**
**SHEET B**

Application Number

EP 18 17 4690

The Search Division considers that the present European patent application does not comply with the
requirements of unity of invention and relates to several inventions or groups of inventions, namely:

    1. claims: 1-5, 20, 24-29

        evaluating images and corresponding imaging parameters with
        a pre-trained machine learning component

    1.1. claim: 24

        classifying an image using an autoencoder network
                        ---

    2. claims: 6-9, 21

        training a machine learning component for evaluating images
        and corresponding imaging parameters
                        ---

    3. claims: 10-13, 22

        training a machine learning component using a combination of
        images in the training;
                        ---

    4. claims: 14-19, 23

        evaluating images with a pre-trained machine learning
        component in which an intermediate representation is derived
        from the input images which is compared to the input image;
                        ---

Please note that all inventions mentioned under item 1, although not
necessarily linked by a common inventive concept, could be searched
without effort justifying an additional fee.

## ANNEX TO THE EUROPEAN SEARCH REPORT
## ON EUROPEAN PATENT APPLICATION NO.

EP 18 17 4690

This annex lists the patent family members relating to the patent documents cited in the above-mentioned European search report.
The members are as contained in the European Patent Office EDP file on
The European Patent Office is in no way liable for these particulars which are merely given for the purpose of information.

25-07-2018

| Patent document cited in search report | Publication date | Patent family member(s) | Publication date |
|---|---|---|---|
| WO 2017122785 A1 | 20-07-2017 | NONE | |

For more details about this annex : see Official Journal of the European Patent Office, No. 12/82

EPO FORM P0459

## REFERENCES CITED IN THE DESCRIPTION

**Non-patent literature cited in the description**

- **ANTONIO PINTO ; LUCA BRUNESE.** Spectrum of Diagnostic Errors in Radiology. *World Journal of Radiology,* 2010, vol. 2.10, 377-383
- **L. BERLIN et al.** Malpractice and radiologists in Cook County, IL: trends in 20 years of litigation. *AJR (''American Journal of Roentgenology''),* 1995, vol. 165, 781-788

- **T. M. MITCHELL.** Machine Learning. McGraw-Hill, 1997, 2
- **M D ZEILER et al.** Adaptive Deconvolutional Networks for Mid and High Level Feature Learning. *International Conference on Computer Vision,* 2011